# NEUE EUROPÄISCHE PATENTSCHRIFT

(11) **EP 2 214 985 B2**
(45) Veröffentlichungstag und Bekanntmachung des Hinweises auf die Entscheidung über den Einspruch: **07.09.2016**
(45) Hinweis auf die Patenterteilung: 19.06.2013
(21) Anmeldenummer: 08854226.1
(22) Anmeldetag: 25.11.2008
(51) Int. Cl.: B65G 1/08, B23Q 7/14

(54) **ZUFÜHREINRICHTUNG**
FEED DEVICE
DISPOSITIF D'ALIMENTATION

(30) Priorität: 27.11.2007 DE 202007016549 U
(43) Veröffentlichungstag der Anmeldung: 11.08.2010
(60) Teilanmeldung: 13171792.8
(73) Patentinhaber: KUKA Systems GmbH, 86165 Augsburg (DE)
(72) Erfinder: JUKIC, Mario, 72218 Wildberg (DE); STURM, Thomas, 85259 Wiedenzhausen (DE)
(74) Vertreter: Ernicke, Klaus Stefan
(86) Internationale Anmeldenummer: PCT/EP2008/009973
(87) Internationale Veröffentlichungsnummer: WO 2009/068241

(56) Entgegenhaltungen:
- EP-A- 1 669 308
- DE-A1- 3 603 534
- DE-A1- 19 521 703
- JP-A- 10 203 611
- JP-A- 2006 298 564
- US-A- 4 582 188
- US-A- 5 642 976
- US-A1- 2006 171 796

## Beschreibung

Die Erfindung betrifft eine Zuführeinrichtung mit den Merkmalen im Oberbegriff des Hauptanspruchs.

Aus der DE 36 03 534 A1 ist eine Zuführeinrichtung nach dem Oberbegriff des Anspruchs 1 sowie ein Reinraum mit einer Fördereinrichtung für den Transport von Carriern für die Aufnahme von Wavern bekannt. Eine Zuführ- und Entnahmeeinrichtung besteht aus Rutschen, auf denen die Carrier unter Schwerkrafteinfluss durch Schleusen gleiten und im Reinraum von einem Roboter entladen werden.

Die JP 10-203 611 A offenbart einen Förderer für Lagerkisten mit geneigten Rollenbahnen. Die Lagerkisten werden in Stapeln auf dem Förderer bewegt, wobei mit einer Greifeinrichtung die jeweils oberste Kiste im Stapel in eine für einen Werker ergonomisch günstige Entladehöhe angehoben wird.

Aus der EP 1 669 308 A1 ist ein Verfahren und eine Vorrichtung zur Bestückung und Entnahme von Lagergut von Regalfächern eines Lagerregals bekannt. Die Regalfächer sind zweiteilig als Lagerfacheinheit ausgebildet, wobei ein Regalbediengerät das Lagergut durch Anheben eines Lagerfachteils entnehmen kann.

Aus der Praxis sind Rutschen als Zuführeinrichtungen bekannt, bei denen an der Beladestelle die Bauteile einzeln oder im Stapel von einem Werker auf abwärts geneigte stangen- oder schienenförmige Führungen gesteckt oder gelegt werden und an diesen entlang bis zur Entladestelle gleiten, wo sie von einer automatischen Bearbeitungseinrichtung, z.B. einem Roboter, übernommen und einer Weiterverarbeitung oder einerweiteren Handhabung zugeführt werden. Derartige Führungseinrichtungen können bei Bauteilen problematisch sein, die zum Verklemmen oder Verkanten neigen oder die nicht nestfähig sind.

Ferner ist es aus der Praxis bekannt, Bauteile in Kisten oder Klinkenmagazinen anzuliefern und auf einen Schubladenförderer zu setzen. Dieser bewegt die Kisten oder Magazine auf der gleichen Bahn vor und zurück. Aus Verfügbarkeitsgründen sind mindestens zwei Schubladenförderer erforderlich, um stets eine befüllte Kiste oder ein Magazin an der Entladestelle für einen unterbrechungsfreien Betrieb der Bearbeitungseinrichtung bereit zu halten. Die Schubladenförderer sind nebeneinander angeordnet und haben einen entsprechend großen Grundflächenbedarf.

Außerdem werden in der Praxis Kettenförderer als Zuführeinrichtung eingesetzt. Diese sind bau- und platzaufwändig und benötigen einen gesteuerten Antrieb. Die Pufferfunktion ist eingeschränkt oder mit einem erhöhten Platzbedarf verbunden.

Es ist Aufgabe der vorliegenden Erfindung, eine bessere Zuführeinrichtung aufzuzeigen.

Die Erfindung löst diese Aufgabe mit den Merkmalen im Hauptanspruch.

Die beanspruchte Zuführeinrichtung hat den Vorteil, dass sie für beliebige Bauteile geeignet ist und deren sichere Zuführung ermöglicht. Sie bietet eine platzsparende Puffermöglichkeit mit großer Kapazität und sorgt für eine sichere Verfügbarkeit der Bauteile. Die Zuführeinrichtung lässt sich in den Takt einer Bearbeitungsstation oder - anlage unterbrechungsfrei einbinden. Sie kommt ferner mit einem geringen Bau- und Platzaufwand aus und bietet eine hohe Wirtschaftlichkeit.

Die Zuführeinrichtung bietet außerdem Sicherheitsaspekte für Bedienungsvorgänge, insbesondere beim manuellen Be- oder Entladen. Die Zuführeinrichtung erlaubt eine Entkoppelung und räumliche Trennung der Be- und Entladestelle unter Schaffung einer Sicherheitszone, insbesondere in Verbindung mit einer Schutzabtrennung, z.B. einem Zaun, die unfallträchtige Arbeitsbereiche, z.B. Roboterzellen, umgibt. Ein Werker kann außerhalb der Schutzabtrennung im sicheren Bereich die Be- oder Entladevorgänge durchführen. Dies kann während des maschinellen Betriebs an der anderen Ladestelle geschehen. Eine Pufferfunktion ist dabei auch für die Ergonomie günstig.

Die einzeln beweglichen Bauteilaufnahmen sorgen für den störungsfreien Transport und können hierfür optimiert sein. Hierfür ist insbesondere eine formschlüssige und kippsichere Führung der Bauteilaufnahmen und eine entsprechend gestaltete Führungsbahn von Vorteil. Eine Überschlagsicherung und eine Bremseinrichtung für die Bauteilaufnahmen erhöhen die Betriebssicherheit und die Verfügbarkeit noch weiter. Diese Sicherheitstechnik ist mit einer maschinellen und vollautomatischen Entladetechnik kompatibel und beeinträchtigt deren Funktion nicht.

Die Bauteile können vom direkten Kontakt mit der Führungsbahn entkoppelt werden. Die Bauteilaufnahmen erlauben eine Anpassung an die Form und Größe von allen Arten von Bauteilen. Insbesondere können diese Bauteile nicht nestfähige Formen haben. Sie können auch vorstehende Kanten haben, die an normalen Rutschen einhaken und den Transport stören würden. Die Bauteile können außerdem in einer platzsparenden Stellung auf den Bauteilaufnahmen angeordnetwerden, was die Kapazitätder Zuführeinrichtung steigert. Die Bauteilanordnung lässtsich auch unter anderen Gesichtspunkten optimieren. z.B. einer zugriffsgünstigen und be-oder entladegünstigen Stellung.

Bedeutsam ist die Anordnung von einer oder mehreren Bauteilführungen in oder an den Bauteilaufnahmen. Dies erlaubt eine definierte, ggf. getrennte und geschützte Anordnung und Positionierung der Bauteile beim Zuführen. Die Bauteilaufnahmen können dadurch auch leichter be- und entladen werden. Eine Kippsicherung kann Bauteile in ihrer vorgesehenen Lage beim Zuführen sichern und voneinander auch bei äußeren Einflüssen, z.B. Bremsen oder Stopps, separiert halten.

Die Bauteilaufnahmen können zugleich eine Trägerfunktion haben und die Bauteile bei der Zuführung abstützen. Die Bauteilaufnahmen können ein oder mehrere Bauteile aufnehmen, z. B. Bauteilstapel oder Bauteilpakete. Andererseits können bei besonders großen Bauteilen auch mehrere Bauteilaufnahmen gemeinsam ein Bauteil halten.

Die Bauteilaufnahmen und die Führungsbahnen können derart aufeinander abgestimmt sein, dass ein sicherer und störungsfreier Transport gewährleistet ist. Die Bauteilaufnahmen können austauschbar sein. Bei einem Bauteilwechsel werden nur die Bauteilaufnahmen oder evtl. Zwischenträger ebenfalls gewechselt, wobei die Führungsbahnen gleich bleiben können.

Die Bauteilaufnahmen können verschiedene Funktionen erfüllen. Einerseits können sie die Bauteile führen und für deren transportsichere Lage sorgen. Hierfür haben die Bauteilaufnahmen eine entsprechende Bauteilführung. Die Bauteilaufnahmen können außerdem die Bauteile voneinander distanzieren und sie ggf. auch vereinzeln. Dies ist für den Transport von nicht nestfähigen Bauteilen und für eine sichere Entladung günstig. Außerdem lassen sich durch eine entsprechende, z.B. kammförmige, Gestaltung die Bauteile in kleinen Abständen und hoher Packungsdichte aufnehmen. Die Bauteilaufnahmen sorgen ferner für eine korrekte Positionierung der Bauteile, insbesondere an der Entladestelle. Dies ist für eine automatische Entnahme durch die Bearbeitungs- oder Handhabungseinrichtung, z.B. einen Roboter, günstig.

Durch die genaue Positionierung können Suchvorgänge bei der Entnahme entfallen oder vereinfacht werden. In Verbindung mit einer Vereinzelung kann außerdem sichergestellt werden, dass die Bauteile stets an der gleichen Stelle und mit der gleichen Lage und Ausrichtung zur Entnahme bereit stehen.

Die Bauteilaufnahmen können auch eine Tragfunktion haben, wobei sie die Bauteile auf der Führungsbahn abstützen. Die Tragfunktion kann alternativ von einer separaten Stützeinrichtung im Bereich der Führungsbahn übernommen werden, so dass die Bauteilaufnahmen entlastet werden können und nur eine Führungsfunktion für die Bauteile haben. Sie können dann entsprechend einfacher und kostengünstiger ausgestaltet sein, z.B. als geschlitzte Bügel.

Zwischen den Führungsbahnen und den hierauf adaptierten Bauteilaufnahmen können die Förderbedingungen optimiert werden. Hierfür können die Führungsbahnen eine Reibminderung haben, die z.B. aus einer Gleitbahn aus einem reibungsarmen Werkstoff und/oder aus frei drehbaren Rollen besteht. Die beanspruchte Zuführeinrichtung erlaubt einen Transport der Bauteilaufnahmen und der Bauteile durch die eigene Schwerkraft entlang der abwärts geneigten Führungsbahnen. Hierbei kann bei Bedarf eine Förderunterstützung durch einen durchrutschfähigen Antrieb vorhanden sein. Vorteilhaft ist auch die Anordnung einer Rückhaltung an der Führungsbahn für die nächstfolgenden Bauteilaufnahme(n), was die störungsfreie Entnahme von Bauteilaufnahme(n) an einer Ladestelle erleichtert.

Auf den Zuführbahnen können die Bauteilaufnahmen einzeln und mit beliebigen Abständen aufgegeben und transportiert werden. Sie können sich unabhängig voneinander und mit beliebigen Abständen auf der Zuführbahn bewegen. Am Bahnende kann ein Staubereich in Verbindung mit einem Endanschlag oder dgl. vorhanden sein, wobei durch die aufgestaute Reihe von Bauteilaufnahmen an der Entladestelle stets mindestens ein Bauteil bereit gestellt werden kann. Durch diese Ausgestaltung kann die Zuführeinrichtung eine Pufferfunktion haben, was eine diskontinuierliche Beladung bei geringem Platzbedarf ermöglicht. Die Verfügbarkeit und ein ausreichender Vorrat an Bauteilen können sicher gestellt werden.

Die Zuführeinrichtung weist mindestens eine Zuführbahn und mindestens eine hiervon räumlich getrennte Rücklaufbahn auf. Hierdurch können die Bauteilaufnahmen in einem Kreislauf geführt werden. Für die Umsetzung der leeren Bauteilaufnahmen an der Entladestelle von der Zuführbahn auf die Rücklaufbahn kann eine Rückführeinrichtung vorhanden sein. Dies kann eine separate Einrichtung sein.

Alternativ kann die Bearbeitungs- oder Handhabungseinrichtung, insbesondere ein Roboter, mit einem geeigneten Werkzeug für die Rückführung sorgen. Die Rückführung der Bauteilaufnahmen kann sehr schnell und innerhalb der Taktzeit erfolgen, wobei eine unterbrechungsfreie Verfügbarkeit von Bauteilen besteht.

Auf der Beladeseite gibt es verschiedene Möglichkeiten für die Übergabe der Bauteile an die Zuführeinrichtung. Hierfür kann einerseits ein Werker eingesetzt werden, der die leeren Bauteilaufnahmen von der Rücklaufbahn auf die Zuführbahn umsetzt und dabei auch mit ein oder mehreren Bauteilen belädt. Andererseits ist es möglich, die Bauteilaufnahmen in einem größeren Kreislauf und auch außerhalb der Zuführeinrichtung zirkulieren zu lassen. Hierbei werden z.B. die Bauteilaufnahmen zum Hersteller der Bauteile gebracht, dort mit den Bauteilen beladen und in einem geeigneten Gebinde wieder zur Zuführeinrichtung zurückgebracht. Hier kann der Werker die Bauteilaufnahmen mitsamt den Bauteilen an die Zuführeinrichtung übergeben. In einer weiteren Abwandlung kann die Anlieferung der Bauteile durch eine geeignete Handhabungseinrichtung durchgeführt werden, die z.B. aus einem Fördergerät miteinem Roboterarm besteht, der die vorbeschriebenen Tätigkeiten des Werkers durchführt. Ferner ist es möglich, die Bauteilaufnahmen mit den Bauteilen in einem Stapel zuzuführen und an der Beladestelle eine Entstapelungsvorrichtung vorzusehen, welche die Bauteilaufnahmen aus dem Stapel vereinzelt und an die Zuführeinrichtung übergibt.

Die Zuführ-und Rückführbahn können angepasste undggf. unterschiedliche Förderbedingungen, insbesondere Reibbedingungen, und demgemäß auch verschiedene Neigungen haben. Hierüber kann bei Platzproblemen an einer Ladestelle, z.B. wegen eines kritischen Roboterarbeitsbereichs, Abhilfe z.B. über eine Spreizung der Bahnen und einen vergrößerten Zugangsbereich geschaffen werden. Andererseits können die Zuführ- und Rückführbahn an einer manuellen Ladestelle ergonomisch eng benachbart enden.

Die Zuführeinrichtung kann eine Sicherungseinrichtung aufweisen, die eine oder mehrere Komponenten haben und unterschiedlich ausgebildet sein kann. Einerseits kann an der Beladestelle eine Einlegemaske vorhanden sein, die eine Zuführung falscher Bauteilaufnahmen und/oder Bauteile verhindert. Ferner kann eine Füllstandskontrolle der Zuführbahn vorhanden sein, die rechtzeitig vor einem Leerlaufen der Zuführeinrichtung warnt. Die Sicherungseinrichtung kann auch eine Transportüberwachung an ein oder mehreren Führungsbahnen aufweisen, die bei Störungen in geeigneter Weise reagiert und z.B. ein Warnsignal abgibt oder einen Hilfsantrieb einschaltet oder dgl. andere Maßnahmen auslöst. Die Sicherungseinrichtung kann ferner eine Riegeleinrichtung beinhalten, mit der die Bauteilaufnahmen für den Beladevorgang an der Zuführbahn arretiert und anschließend für den Abtransport freigegeben werden können.

Die Zahl und Anordnung der Führungsbahnen an der Zuführeinrichtung kann beliebig variieren und lässt sich an die Platzverhältnisse und den Funktionsbedarf anpassen. Die Führungsbahnen lassen sich in mehreren Etagen übereinander anordnen, was den Grundflächenbedarf minimiert. Die Führungsbahnen können starr an einem ggf. gemeinsamen Gestell angeordnet sein. Alternativ ist eine bewegliche Anordnung möglich, falls die Be- und Entladestellen nicht einander gegenüberliegen oder eine Beweglichkeit aus anderen Gründen erforderlich oder nützlich ist.

Die Zuführeinrichtung kann an beliebiger Stelle angeordnet und eingesetzt werden. Besondere Vorteile ergeben sich an Bearbeitungsstationen, die von einer Schutzeinrichtung oder einer Umgrenzung umgeben sind. Die Zuführeinrichtung erlaubt einen Bauteiltransport durch diese Schutzeinrichtung oder Umgrenzung hindurch. Dies hat Vorteile für die Unfallsicherheit und verringert den Schutzaufwand für Personen.

In den Unteransprüchen sind weitere vorteilhafte Ausgestaltungen der Erfindung angegeben.

Die Erfindung ist in den Zeichnungen beispielsweise und schematisch dargestellt. Im Einzelnen zeigen:
- Figur 1:: eine Zuführeinrichtung an einer Bearbeitungsstation in Seitenansicht,
- Figur 2:: eine Variante der Zuführeinrichtung von Figur 1 mit einer anderen Peripherie,
- Figur 3:: eine Draufsicht auf die Zuführeinrichtung gemäß Pfeil III von Figur 1,
- Figur 4:: eine Bauteilaufnahme mit einem Bauteilpaket in Seitenansicht,
- Figur 5:: eine Bauteilaufnahme mit einer Vereinzelungseinrichtung in Seitenansicht,
- Figur 6:: eine Führungsbahn mit einer bügelförmigen Bauteilaufnahme und einem Bauteil in Stirnansicht,
- Figur 7 und 8:: Varianten der Zuführeinrichtung in Stirnansichit,
- Figur 9 und 10:: eine Abwandlung der Führungsbahn und der Bauteilaufnahme in Stirnansicht und geklappter Seitenansicht,
- Figur 11:: eine weitere Abwandlung einer Bauteilaufnahme mit einer Führungsbahn,
- Figur 12:: einen Bahnabschnitt an der Entladestelle mit einer Bauteilaufnahme und einem Greifelement;
- Figur 13:: eine Funktionsvariante der Zuführeinrichtung und eine Riegeleinrichtung in Seitenansicht,
- Figur 14:: eine Kippsicherung der Führungseinrichtung,
- Figur 15:: eine Überschlagsicherung der Führungseinrichtung,
- Figur 16:: eine Stirnansicht einer Führungsbahn mit einer Bauteilaufnahme gemäß Pfeil XVI von Figur 15 und
- Figur 17 und 18:: eine Bremseinrichtung für eine Bauteilaufnahme in Seitenansicht und in verschiedenen Betriebsstellungen.

Die Erfindung betrifft eine Zuführeinrichtung (1) für Bauteile (2) und das zugehörige Verfahren nebst der angepassten Bauteilaufnahmen; Sie betrifft ferner eine Bearbeitungsstation (8) mit ein oder mehreren solcher Zuführeinrichtungen (1) und eine Bearbeitungsanlage (7), die mindestens eine solche Bearbeitungsstation (8) aufweist.

Die Zuführeinrichtung (1) weist mehrere Bauteilaufnahmen (4) für jeweils ein oder mehrere Bauteile (2) und zwei oder mehr Führungsbahnen (16,17) für die Zu- und Rückführung der Bauteilaufnahmen (4) auf. Die Führungsbahnen (16,17) sind z.B. als getrennt angeordnete Zuführbahn (16) und Rücklaufbahn (17) für die Bauteilaufnahmen (4) ausgebildet. Sie erstrecken sich zwischen einer Beladestelle (19) und einer Entladestelle (20).

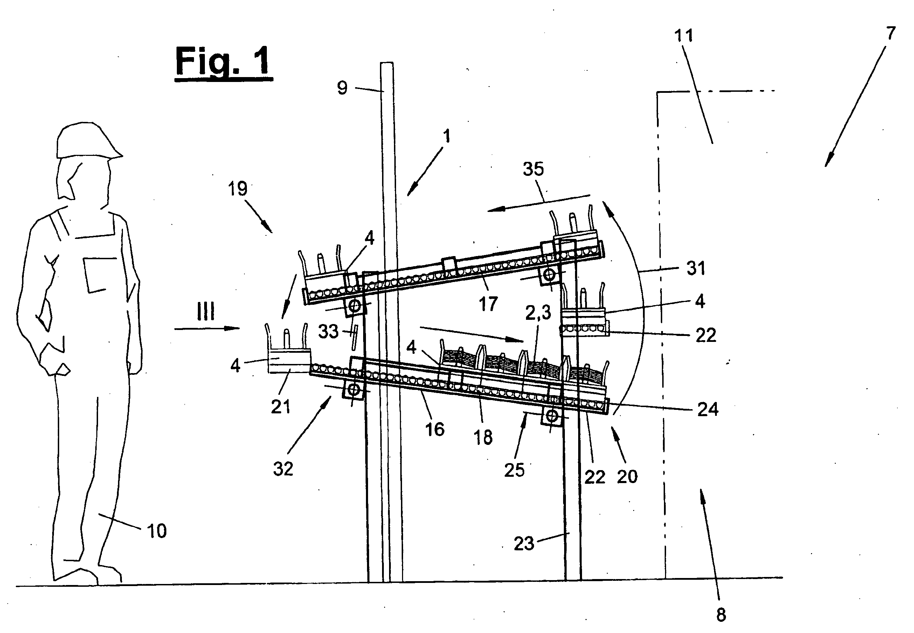

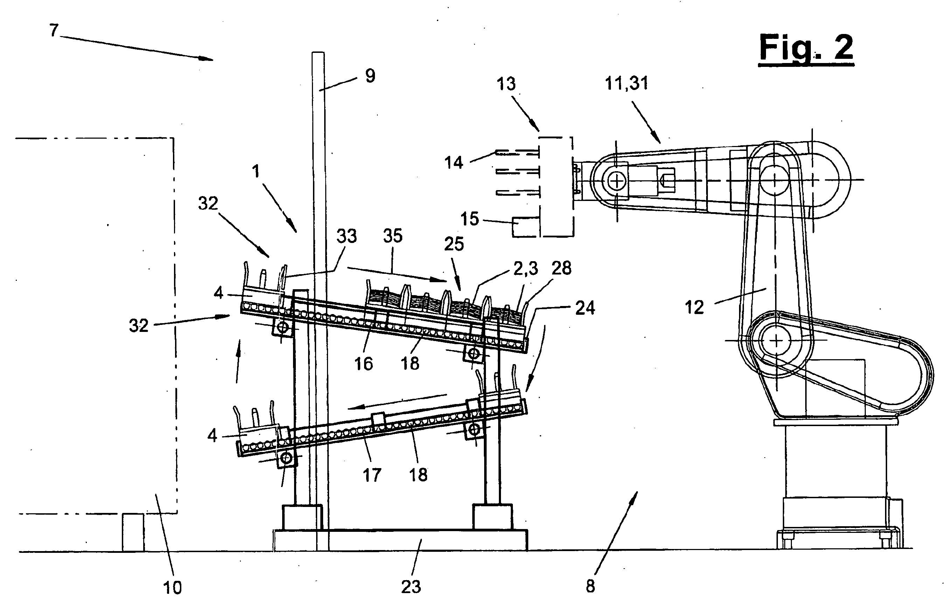

An der Beladestelle (19) ist eine Anlieferung (10) für die Bauteile (2) und ggf. auch für Bauteilaufnahmen (4) vorgesehen. Dies kann in der Ausführungsform von Figur 1 ein Werker sein für eine manuelle Bedienung der Zuführeinrichtung (1). In der Variante von Figur 2 ist für die Anlieferung (10) der Bauteile (2) und/oder Baueilaufnahmen (4) ein Förder- und Handhabungsgerät vorgesehen und schematisch dargestellt. Dies kann z.B. ein fernsteuerbares, flurgebundenes Fahrzeug mit einem Magazin und einem Roboterarm sein. Daneben sind beliebige andere geeignete technische Ausgestaltungen möglich. An der Entladestelle (20) der Zuführeinrichtung (1) ist eine automatische Bearbeitungseinrichtung oder Handhabungseinrichtung (11) angeordnet, welche die zugeführten Bauteile (2) von der Zuführeinrichtung (1) entnimmt und in beliebiger Weise handhabt und/oder bearbeitet.

Diese Einrichtung (11) kann in jeder geeigneten Weise ausgebildet sein. In der gezeigten Form ist sie als mehrachsiger Manipulator oder Roboter (12) ausgebildet, z.B. als sechsachsiger Gelenkarmroboter mit einer mehrachsigen Roboterhand. Zur Handhabung der Bauteile (2) und ggf. auch der Bauteilaufnahmen (4) kann die Einrichtung (11), insbesondere der Roboter (12), eine steuerbare Greifeinrichtung (13) aufweisen. Diese ist in Figur 2 schematisch dargestellt und besitzt beispielsweise ein oder mehrere Greifelemente (14) für die Bauteile (2) und ggf. ein oder mehrere Greifelemente (15) für ein oder mehrere Bauteilaufnahmen (4). Die Greifelemente (14,15) können in beliebig geeigneter Weise, z.B. als bewegliche Greiffinger, Sauger, steuerbare Magnete oder dgl. ausgebildet sein und z.B. von der Robotersteuerung als Zusatzachse gesteuert werden.

Die Führungsbahnen (16,17) sind an die Bauteilaufnahmen (4) und deren Transport adaptiert. Die Führungsbahnen (16,17) können hierfür eine geeignete Führungseinrichtung (29) für die Bauteilaufnahmen (4) besitzen, die z.B. für eine mehrseitige formschlüssige und kippsichere Führung sorgt und eine Bewegung der Bauteilaufnahmen (4) im wesentlichen nur in Förderrichtung (35) zulässt.

Die formschlüssige und kippsichere Führung (29) kann zumindest im Transport- und Bewegungsbereich der Führungsbahnen (16,17) bestehen und kann an deren Enden durch eine Aussparung (39) unterbrochen sein, um ein störungsfreies Be- und Entladen zu ermöglichen. Die Führung (29) übergreift bevorzugt mit Formschluss ein geführtes Teil (41), z.B. eine Führungsfläche, einen Absatz, einen Bügel oder dgl., der Bauteilaufnahme (4) und verhindert dadurch ein ungewolltes Verlassen der Führungsbahn (16,17), insbesondere ein Abheben oder Kippen.

In den gezeigten Ausführungsformen werden die Bauteilaufnahmen (4) und die Bauteile (2) nach Art einer Rutsche durch Schwerkraft transportiert. Hierfürweisen die Führungsbahnen (16,17) eine in Förderrichtung (35) abwärts gerichtete Neigung und eine geeignete Halteeinrichtung am Bahnende, z.B. einen Endanschlag (24), auf. Die Zuführ-und Rücklaufbahnen (16,17) haben entgegengesetzt gerichtete Neigungen. Die Zuführbahn (16) erstreckt sich von der Beladestelle (19) abwärts zur Entladestelle (20). Die Rückführbahn (17) ist von der Entladestelle (20) abwärts zur Beladestelle (19) gerichtet.

Die Bauteilaufnahmen (4) können auf den Führungsbahnen (16,17) unabhängig voneinander transportiert werden. Sie können dabei gegenseitig in Kontakt gebracht und aufgestaut werden. Die Zuführeinrichtung (1) kann für die beladenen und ggf. auch die leeren Bauteilaufnahmen (4) eine Pufferfunktion haben, wobei die Führungsbahnen (16,17) zumindest am Förderende einen Staubereich (25) aufweisen.

Die Zahl und Anordnung der Zuführ-und Rücklaufbahnen (16,17) kann beliebig variieren. In der Ausführungsform von Figur 1 und 2 sind eine Zuführbahn (16) und eine Rücklaufbahn (17) mit Abstand übereinander und an einem gemeinsamen Gestell (23) angeordnet. In der Variante von Figur 1 ist die Zuführbahn (16) unten und die Rücklaufbahn (17) oben angeordnet, wobei die Bahnenden an der Beladestelle (19) enger benachbart sind als an der Entladestelle (20). In der Variante von Figur 2 ist die Zuordnung umgekehrt.

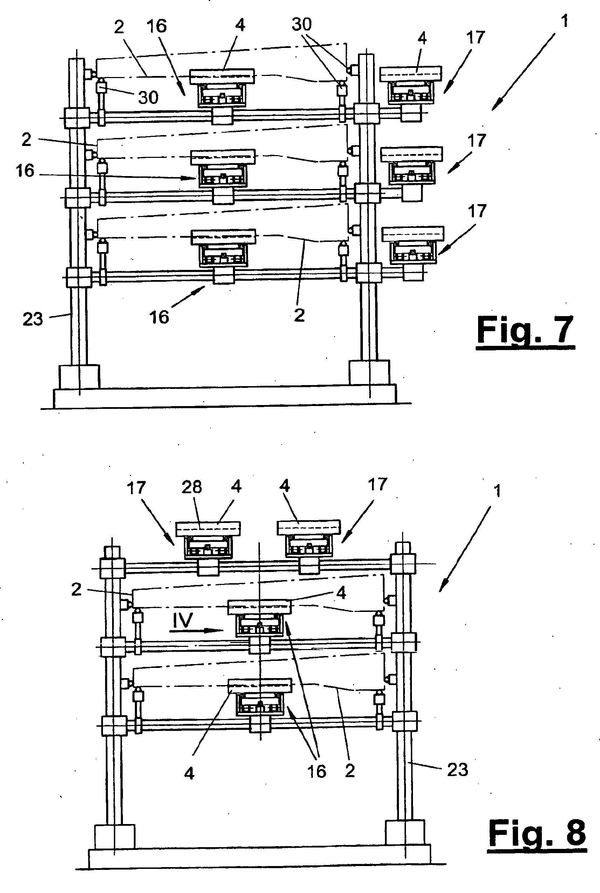

Figur 7 und 8 zeigen zwei weitere Varianten. In Figur 7 sind drei Zuführbahnen (16) mit Abstand übereinander angeordnet, wobei die Rücklaufbahnen (17) sich auf gleicher Höhe und seitlich neben den zugehörigen Zuführbahnen (16) befinden. Bei der Variante von Figur 8 sind im unteren Gestellbereich zwei Zuführbahnen (16) übereinander angeordnet, wobei oben am Gestell (23) zwei Rücklaufbahnen (17) nebeneinander und auf gleicher Höhe angeordnet sind. Diese Gestaltung ist für breite Bauteile (2) günstig, die mehrere eigene Etagen für die Zuführung verlangen, wobei im Rücklauf mehrere der schmalen Bauteilaufnahmen (4) nebeneinander in einer Ebene Platz finden.

Daneben sind weitere Abwandlungen möglich. In den gezeigten Ausführungsbeispielen ist die Zahl der Zuführ-und Rücklaufbahnen (16,17) gleich groß. Sie kann alternativ unterschiedlich sein, wobei z.B. mehr Zuführbahnen (16) als Rücklaufbahnen (17) vorhanden sind.

Die Führungsbahnen (16,17) haben in den gezeigten Ausführungsbeispielen eine gerade und schienenartige Erstreckung. Sie können alternativ einen zumindest bereichsweise gekrümmten Bahnverlauf haben. Die gezeigten Führungsbahnen (16,17) haben ferner eine stetige Neigung und im wesentlichen die gleiche Länge, was ebenfalls abwandelbar ist.

Die Führungsbahnen (16,17) besitzen eine Reibungsminderung (18) für den sicheren und störungsfreien Transport der Bauteileaufnahmen (4). Die Reibungsminderung (18) kann z.B. ein reibungsarmer Gleitbelag sein. Alternativ oder zusätzlich können frei drehbare Rollen vorhanden sein. Daneben sind andere geeignete Maßnahmen zur Reibungsminderung (18) möglich. Die Reibungsminderung (18) kann mit der Führungseinrichtung (29) für die Bauteilaufnahmen (4) kombiniert sein. Insbesondere können die genannten Rollen zugleich die Bauteilaufnahmen (4) führen.

Die Reibungs- oder Rolleigenschaften der Führungsbahnen (16,17) können gleich oder unterschiedlich sein. Diese Eigenschaften können auch in einem bestimmten Verhältnis zur Neigung der jeweiligen Führungsbahnen (16,17) stehen. Die Neigungen wiederum können sich nach den Erfordernissen an der Anliefer- und/oder Bearbeitungsstelle richten. Falls z.B. die Anordnung und der Arbeitsbereich der Bearbeitungs- oder Handhabungseinrichtung (11) eine bestimmte Lage oder Beabstandung der Führungsbahnenden erfordert, wobei andererseits auf der Anlieferseite für einen Werker Ergonomieerfordernisse zu beachten sind, können die Führungsbahnen (16,17) unterschiedliche Neigungen haben. Die z.B. flacher geneigt Zuführbahn (16) kann als leichtgängige Rollenbahn ausgeführt sein, wobei die steiler abwärts geneigte Rückführbahn (17) einen stärker bremsenden Reibbelag (18) aufweist, der eine übermäßige Transportgeschwindigkeit der Bauteilaufnahmen (4) verhindert.

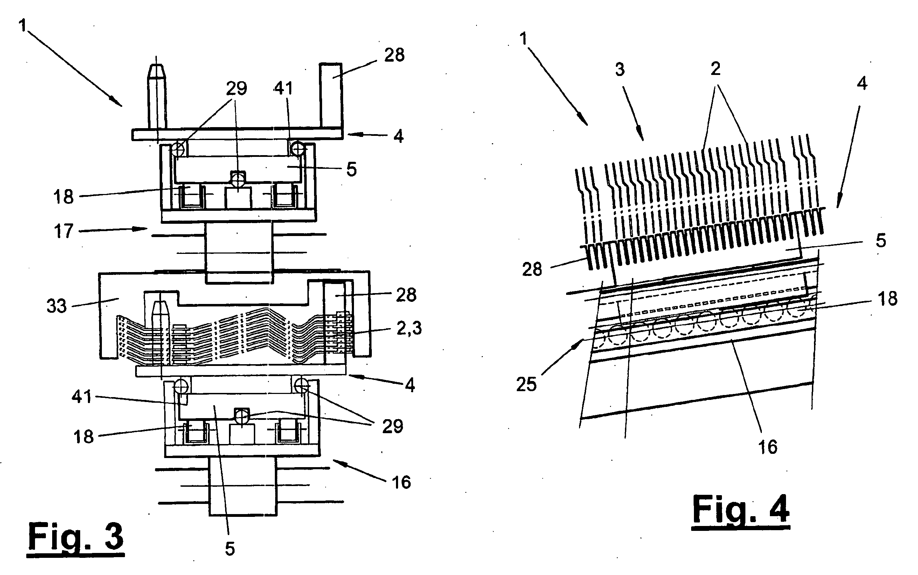

Die Bauteilaufnahmen (4) können ein oder mehrere Bauteile (2) aufnehmen. Es ist außerdem möglich, dass für ein großes und lang gestrecktes Bauteil (2) zwei oder mehr distanzierte Bauteilaufnahmen (4) vorgesehen sind. Andererseits können die Bauteilaufnahmen (4) mehrere Bauteile (2) aufnehmen, die z.B. gemäß Figur 1 - 3, 9 und 10 in einem oder mehreren Stapeln (3) übereinander angeordnet sind. Figur 4, 5 und 11 zeigen Varianten einer Anordnung der Bauteile (2) nebeneinander in mindestens einem Bauteilpaket (3).

Die Bauteilaufnahmen (4) können verschiedene Funktionen haben. Sie besitzen eine Bauteilführung (28) zur Positionierung und Führung von ein oder mehreren Bauteilen (2). Die Bauteilführung (28) ist entsprechend der Bauteilform ausgebildet und angeordnet. In der Ausführungsform von Figur 1 bis 3 sind beispielsweise mehrere hochstehende Führungszapfen und/oder Führungswände vorhanden, auf welche die Bauteile (2) oder der Bauteilstapel (3) zur formschlüssigen Führung aufgesteckt werden kann. In dieser Variante sind die Bauteile (2) nestfähig ausgebildet. Die Bauteilaufnahme (4) hat hierbei auch eine Tragfunktion und bildet einen wannenartigen Bauteilträger.

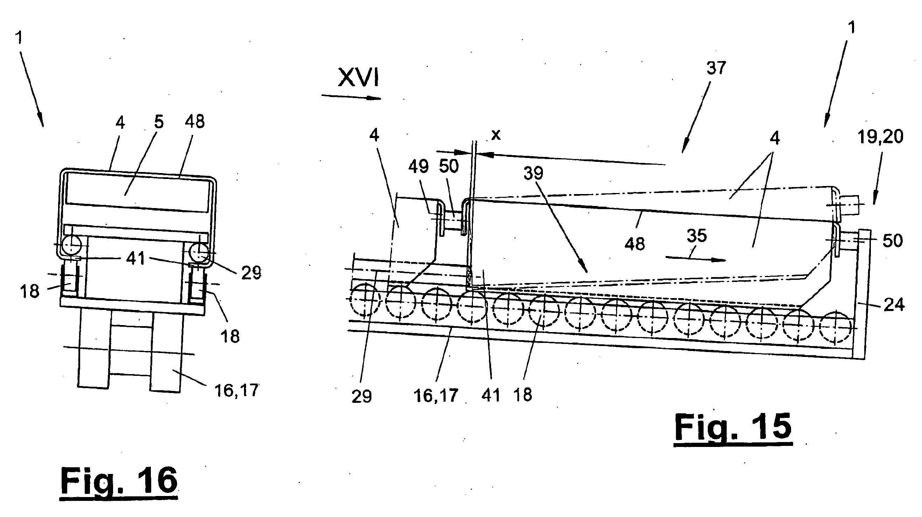

Die Bauteilaufnahme (4) besitzt einen Korpus (5), der auch die Anlage- und Angriffsflächen (41) für die Führungseinrichtung (29) bietet, die hier z.B. aus starren oder beweglichen, z.B. um ihre Längsachse drehenden Führungsstangen, ggf. im Zusammenwirken mit den besagten Rollen (18) besteht. Der Korpus (5) kann gemäß Figur 16 auf einer oder auf beiden Seiten nach innen oder außen abgewinkelte Bügel oder Flansche (41) aufweisen, welche das geführte Teil darstellen, die Führungsstange (29) formschlüssig hintergreifen und die besagten Anlage- und Angriffsflächen bieten. Andererseits kann der quer gerichtete Flansch auch die Auflage- und Stützfläche auf der Führungsbahn (16,17), insbesondere auf einem Gleitbelag oder auf Rollen (18) bilden.

Auf der Oberseite und oberhalb der Führungsbahn (16,17) kann der Korpus (5) eine verbreiterte Deck- oder Tragplatte (48) mit der Bauteilführung (28) aufweisen. Wie Figur 15, 17 und 18 verdeutlichen, kann die z.B. aus einem dünnen Blech bestehende Deck- oder Tragplatte (48) vorn und/oder hinten stirnseitig den Korpus (5) mit einem nach unten abgewinkelten und von der Korpuswand zu Federungszwecken ggf. distanzierten Steg (49) übergreifen. Zumindest einer der Stege (49), bevorzugt der in Transportrichtung (35) vordere Steg, kann einen axial vorstehenden Puffer (50) tragen, der am Steg (49) der vorherigen Bauteilaufnahme (4) anläuft, wobei durch die federnden Stege (49) der Aufprall gedämpft wird. Ein elastischer Puffer (50) kann alternativ auch ohne Steg (49) direkt an der Korpuswand angeordnet sein.

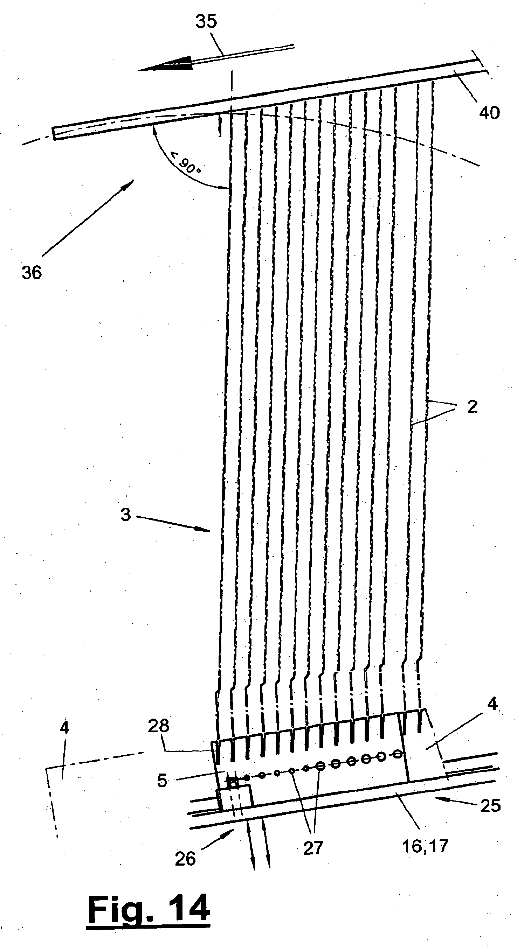

Figur 4, 5 und 14 zeigen eine Variante einer Bauteilaufnahme (4) mit Trägerfunktion, deren Korpus (5) an der Oberseite kammartig ausgebildet ist und mehrere schlitzförmige Bauteilführungen (28) aufweist, in welche die Bauteile (2) stehend eingesteckt werden können. Aus Platzspargründen können die Bauteile (2) z.B. gemäß Figur 14 hochkant eingesteckt werden.

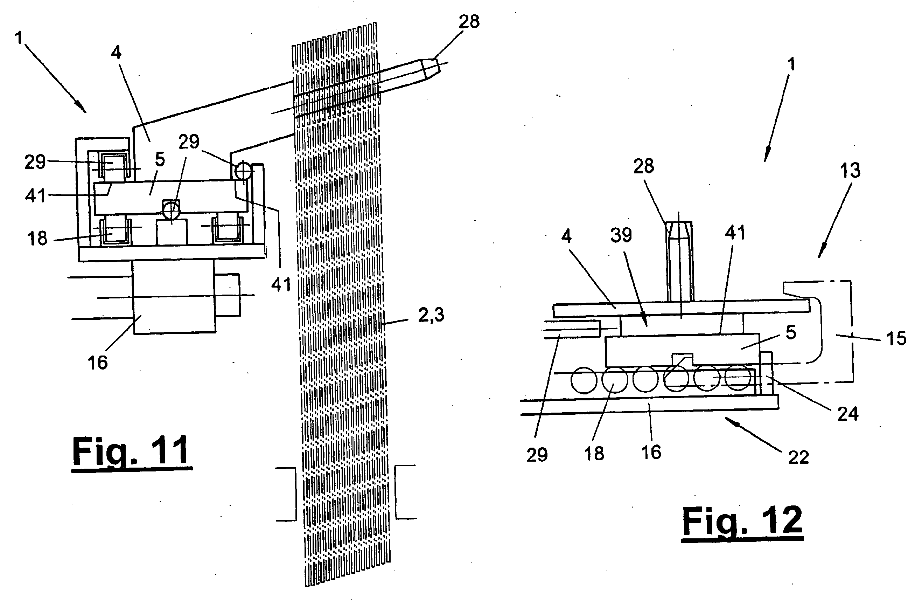

In der Variante von Figur 11 hat die Bauteilaufnahme (4) einen abgewinkelten Korpus (5), der an der Unter-und Oberseite an der Führungseinrichtung (29) formschlüssig und kippsicher geführt ist. Die Führungsflächen (41) werden hier an der Korpusoberseite gebildet. Hier ist auch ersichtlich, wie die reibungsarmen Rollen oder der Gleitbelag (18) eine Führungsfunktion haben.

Am oberen Ende des abgewinkelten Korpus (5) ragt eine zapfenartige Bauteilführung (28) seitlich und schräg aufwärts gerichtet weg. Hier sind die Bauteile (2) in einem Bauteilpaket (3) seitlich aufgesteckt und neben der Führungsbahn (16) nach unten hängend angeordnet. Am unteren Bauteilbereich können zusätzliche seitliche Führungselemente vorhanden sein.

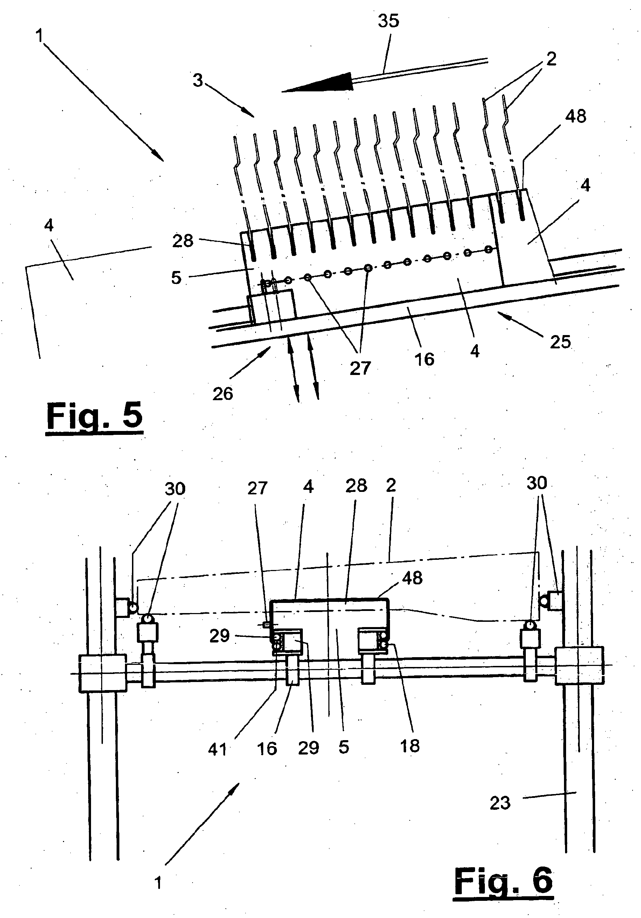

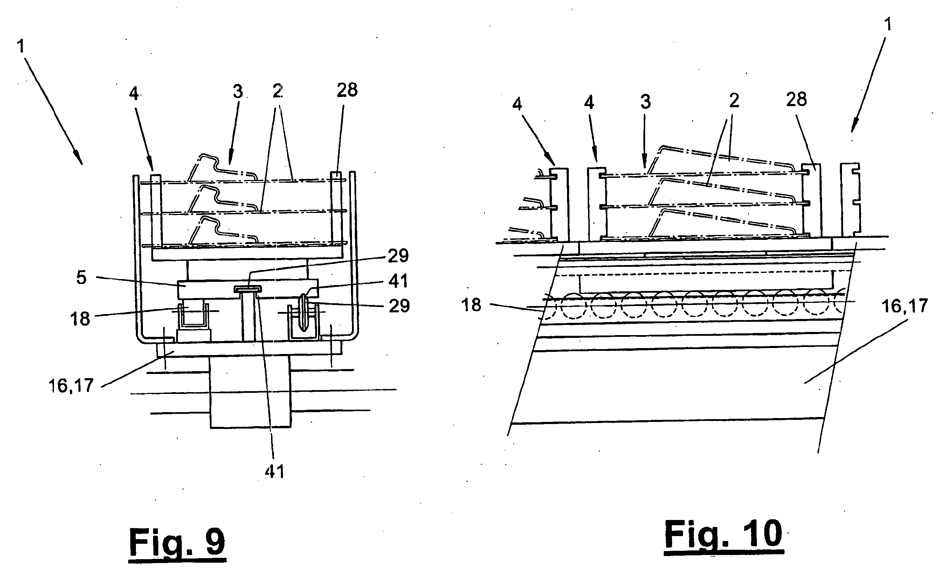

In der Variante von Figur 9 und 10 sind Bauteilaufnahmen (4) für nicht nestfähige Bauteile (2) dargestellt, die hier in einem Stapel (3) liegend auf einer Bauteilaufnahme (4) transportiert werden. Die Bauteilführung (28) besteht z. B. aus vier an den Ecken der Bauteilaufnahme (4) angeordneten und an der Innenseite mit Nuten versehenen Pfosten, in welche die Bauteile (2) mit ihren Rändern eingesteckt werden können. Auch in dieser Ausführungsform wird ein kammartiger Bauteilträger gebildet, der die Bauteile (2) voneinander distanziert. Diese Distanzierungsfunktion ist auch bei der anderen Ausführungsform von Figur4 und 5 gegeben. Um die Bauteile (2) auch in Schlitzrichtung und an den Seiten zu führen, können gemäß Figur 9 an der Führungsbahn (16,17) seitliche Führungswände angebracht sein.

Figur 9 und 10 verdeutlichen außerdem eine andere Variante der Kombination von Reibminderung (18) und Führungseinrichtung (29), wobei hier die Seitenführung der Bauteilaufnahmen (4) über eine am Umfang prismatisch profilierte Rolle der Führungseinrichtung (29) in Verbindung mit einer entsprechenden Aufnahmenut (41) an der Unterseite des Korpus (5) bewirkt wird. Die Höhenführung (29) wird durch ein T-Profil in Verbindung mit einer entsprechenden Hammerkopfnut als Führungsteil (41) an der Korpusunterseite bewirkt.

In der Ausführungsform von Figur 6 bis 8 können die Bauteilaufnahmen (4) vor allem eine Führungsfunktion haben, wobei sich die Bauteile (2) auch seitlich über die Bauteilaufnahmen (4) hinaus erstrecken. Die Abstützung der Bauteile (2) kann hier an ein oder beiden Enden über separate reibungsarme Stützeinrichtungen (30) erfolgen, die neben der Führungsbahn (16) am Gestell (23) angeordnet sind. Die Bauteilaufnahmen (4) können in dieser Ausführungsform ohne Stützfunktion für die Bauteile (2) ausgebildet sein.

Figur 6 verdeutlicht hierbei auch eine besonders einfache Ausbildung der Bauteilaufnahmen (4), die bügelförmig gestaltet sind und aus einem C-förmig abgekanteten Blech mit Schlitzen zur Bildung der Bauteilführung (28) bestehen. Die nach innen gekanteten freien Blechränder greifen zwischen Stangen- oder Rollenpaarungen (18) an der Führungseinrichtung (29).

Die Bauteilaufnahmen (4) können die Bauteile (2) an der Entladestelle (20) einzeln oder im Stapel öder Paket (3) positionieren. In der Variante von Figur 1 und 2 kann die Bearbeitungs- oder Handhabungseinrichtung (11) die im Stapel (3) übereinander aufgeschichteten Bauteile (2) von oben her greifen und entnehmen. Die sich verringernde Stapelhöhe wird von der Bearbeitungs- und Handhabungseinrichtung (11) automatisch kompensiert. Ggf. kann eine Suchfuriktion geschaltet sein. Alternativ kann die abnehmende Stapelhöhe durch eine Höhenverstellung der Bauteilaufnahme (4) kompensiert werden, so dass die Bauteile (2) immer aus der gleichen Position gegriffen werden können. Bei einer Bauteilaufnahme gemäß Figur 9 und 10 sind die seitlichen Führungswände an der Entladestelle (20) zumindest einseitig ausgespart, so dass die Bauteile (2) von oben her gegriffen und seitlich aus den Nuten der Bauteilführung (28) geschoben werden können. Die Bauteilposition ist auch hier durch die vorgegebene Nutenlage definiert.

Bei den anderen kammartigen Bauteilträgern (4) von Figur 4 bis 8 können die Bauteile (2) an der Entladestelle (20) ebenfalls von oben her gegriffen und aus den Führungsschlitzen herausgezogen werden. Durch den definierten Schlitzabstand ist auch die Bauteilposition in Transportrichtung (35) definiert. Die abnehmende Länge des Bauteilpakets (3) wird in der Variante von Figur 4 durch die Bearbeitungs- oder Handhabungseinrichtung (11) automatisch kompensiert, ggf. durch eine Suchfunktion.

Die Zuführbahn (16) kann an der Entladestelle (20) in weiterer Abwandlung eine vereinzelungseinrichtung (26) aufweisen. Figur 5 zeigt hierfür eine mögliche Ausführungsform. An der Bautellaufnahme (4) sind an geeigneter Stelle, z.B. an der Seitenwand, eine Reihe von Vereinzelungselementen (27), z.B. distanzierte Zapfen, in Transportrichtung (35) hintereinander angeordnet. Die Lage der Vereinzelungselemente (27) ist auf die Lage der Aufhahmeschlitze der Bauteilführung (28) abgestimmt. Die Vereinzelungseinrichtung (26) weist zwei oder mehr bewegliche Anschlagstifte auf, die abwechselnd die Vereinzelungselemente (27) in Anschlagstellung festhalten und freigeben. Die Bauteile (2) werden einzeln und von der Vorderseite der Bauteilaufnahmen (4) her entnommen. Die abnehmende Paketlänge wird durch ein getaktetes Vorschieben der Bauteilaufnahme (4) über die Vereinzelungseinrichtung (26) kompensiert. Hierdurch steht das zu entnehmende Bauteil (2) stets in der gleichen Position. Die im Staubereich (25) von hinten auflaufenden Bauteilaufnahmen (4) schieben die vorderste Bauteilaufnahme (4) hierbei nach vorn.

An der Entladestelle (20) kann ferner eine Rückhaltung für die zweite und folgende Bauteilaufnahmen (4) im Staubereich (25) angeordnet sein. Die im einzelnen nicht dargestellte Rückhaltung kann einen Bremsfinger öder ein anderes Rückhalteorgan haben, welches in Abhängigkeit vonder Existenz der ersten Bauteilaufnahme(4) im Staubereich (25) betätigt wird. Wenn ein Roboter oder eine andere Handhabungseinrichtung (11) die erste Bauteilaufnahme (4) entnimmt, bremst die Rückhaltung die nachfolgenden Bauteilaufnahmen (4) temporär und mindert den Druck dieser nachfolgenden Aufnahmereihe auf die erste Bauteilaufnahme (4). Die Rückhaltung kann die erste und die folgende Bauteilaufnahme (4) auch ein kleines Stück voneinander distanzieren. Nach Entnahme der ersten Bauteilaufnahme (4) weicht die Rückhaltung aus und lässt die folgenden Bauteilaufnahmen (4) an die Entladestelle (20) nachrutschen.

Die geleerten Bauteilaufnahmen (4) werden an der Entladestelle (20) von der Zuführbahn (16) entnommen und auf die Rücklaufbahn (17) umgesetzt. Hierfür ist eine Rückführeinrichtung (31) vorgegehen, die in verschiedener Weise ausgebildet sein kann.

In der Variante von Figur 1 ist der letzte Bahnabschnitt (22) der Zuführbahn (16) an der Entladestelle (20) beweglich angeordnet und kann mit der darauf befindlichen Bauteilaufnahme (4) mittels einer Hubeinrichtung am Gestell (23) gehoben und gesenkt werden, wobei auch die Kipplage verändert werden kann. In der Hubstellung kann der Bahnabschnitt (22) an die Rücklaufbahn (17) in deren Neigung andocken, wodurch die leere Bauteilaufnahme (4) auf die Rücklaufbahn (17) gleitet und zur Beladestelle (19) rutscht. Anschließend wird der Bahnabschnitt (22) wieder abwärts bewegt und dockt in der Senkstellung an die Zuführbahn (16) an, wobei er auch deren Neigung einnimmt oder in einer Horizontallage bleibt und die nächste beladene Bauteilaufnahme (4) empfängt. Ein steuerbarer Stopper oder die Vereinzelungsvorrichtung (26) halten hierbei den Aufnahmestapel an der Zuführbahn (16) zeitweise zurück.

Figur 2 und 12 zeigen eine Variante, in der die Bearbeitungs- und Handhabungseinrichtung (11), insbesondere der Roboter (12) mit seiner Greifeinrichtung (13), die Funktion der Rückführeinrichtung (31) übernimmt. Der Roboter (12) kann mit dem Greifelement (15) die leere Bauteilaufnahme (4) greifen, von der Zuführbahn (16) abheben und auf der Rücklaufbahn (17) wieder aufsetzen. Die Führungseinrichtungen (29) beider Führungsbahnen (16,17) haben hierfür an der Entladestelle (20) eine entsprechende Aussparung (39). Eine solche Aussparung (39) kann auch an der Beladeseite (19) vorhanden sein.

Figur 1 verdeutlicht außerdem eine Variante, in der die Zuführbahn (16) auch an der Beladestelle (19) einen beweglichen Bahnabschnitt (21) aufweist. Dieser kann z.B. eine für den Werker (10) ergonomisch günstige Lage einnehmen, die horizontal oder zum Werker (10) hin gekippt sein kann. In dieser Lage kann der Werker (10) die Bauteilaufnahme (4) leichter beladen. Anschließend kann er den Bahnabschnitt (21) mit einer geeigneten Vorrichtung wieder in eine mit der Zuführbahn (16) fluchtenden Neigung zum Überschieben der Bauteilaufnahme (4) bringen.

Die Zuführeinrichtung (1) kann eine Sicherungseinrichtung (32) aufweisen. Diese kann ein oder mehrere Komponenten in unterschiedlicher Ausgestaltung und Anordnung aufweisen. Dies kann z.B. eine in Figur 1, 2 und 3 dargestellte Einlegemaske (33) sein, die eine an die Kontur der Bauteilaufnahme (4) und des oder der Bauteile (2) angepasste Durchlassöffnung besitzt und nur korrekte Bauteile (2) und Bauteilaufnahmen (4) durchlässt.

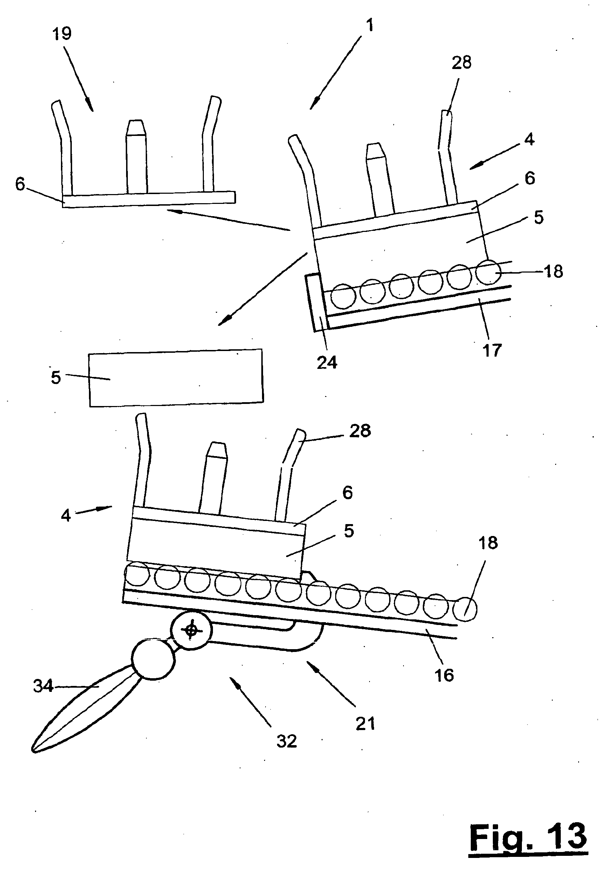

Gemäß Figur 13 kann die Sicherungseinrichtung (32) alternativ oder zusätzlich eine Riegeleinrichtung (34) an der Beladestelle (19) aufweisen. Diese besitzt eine Rückhaltenase, welche die zu beladende Bauteilaufnahme (4) am oberen Ende der Zuführbahn (16) festhält. Nach erfolgter Beladung entriegelt der Werker (10) die Rückhaltenase durch Drehung mit einem Handgriff und gibt die Bauteilaufnahme (4) für den Abtransport frei.

In den gezeigten Ausführungsformen von Figur 1 bis 12 sind eine Vielzahl von Bauteilaufnahmen (4) vorhanden, die innerhalb der Zuführeinrichtung (1) in einem Kreislauf zirkulieren und die mit Bauteilen (2) be-und entladen werden. Alternativ können die Bauteilaufnahmen (4) in einem größeren Kreislauf wandern, der sich über die Zuführeinrichtung (1) hinaus und z.B. bis zu einer Kommissionierstelle oder bis zum Hersteller der Bauteile (2) erstreckt. Von dort werden dann die Bauteile (2) zusammen mit den Bauteilaufnahmen (4) an die Zuführeinrichtung (1) geliefert.

Figur 13 zeigt eine weitere Variante mit mehrteiligen Bauteilaufnahmen (4). Diese bestehen aus einem an die Führungsbahnen (16,17) angepassten Korpus (5) und mindestens einem darauf lösbar angeordneten Zwischenträger (6), an dem die Bauteilführung (28) angeordnet ist. Diese Ausführung erlaubt eine Umrüstung der Zuführeinrichtung (1) aufverschiedene Bauteile (2) durch Wechsel der Zwischenträger (6), wobei die Korpusse (5) beibehalten werden können. In weiterer Abwandlung ist es möglich, die abgelösten Zwischenträger (6) für den Bauteiltransport vom Bauteilhersteller oder einer Kommissionierstelle zur Zuführeinrichtung (1) zu benutzen. Hierbei zirkulieren die Zwischenträger (6) in der vorher erwähnten Weise in einem Kreislauf, der über die Zuführeinrichtung (1) hinausreicht. Ferner gestattet die mehrteilige Ausführung eine einheitliche Ausbildung der Führungsbahnen (16,17) und der Korpusse (4) in einer entsprechend großen und wirtschaftlichen Stückzahl. In einer weiteren Variante ist es möglich, verstellbare Bauteilführungen (28) in Verbindung mitden Bauteilaufnahmen (4) von Figur 1 bis 12 oder auch den Zwischenträgern (6) von Figur 13 zu benutzen.

Die Zuführeinrichtung (1) kann in Verbindung mit beliebigen Bearbeitungsstationen (8) und Bearbeitungsanlagen (7) eingesetzt werden. Figur 1 und 2 zeigen eine bevorzugte Ausführungsform, in der die Bearbeitungsstation (8) zumindest stellenweise eine periphere Schutzeinrichtung (9) oder Umgrenzung aufweist und von dieser z.B. umgeben ist. Dies kann aus Unfallschutzgründen erforderlich sein, um einen Zutritt von Werkern (10) zum Arbeitsbereich der Bearbeitungs- und Handhabungseinrichtung (11) zu verhindern. Die Schutzeinrichtung (9) kann z.B. ein Zaun oder eine Wand sein. Die Zuführeinrichtung (1) erstreckt sich durch die Schutzeinrichtung (9) hindurch, welche hierfür eine geeignete Öffnung unter Wahrung ihrer Schutzfunktion aufweist. Die Beladestelle (19) befindet sich außerhalb der Schutzeinrichtung (9) und der Bearbeitungsstation (8). Die Entladestelle (20) ist innenseitig angeordnet.

Die Zuführeinrichtung (1) kann in verschiedenen Betriebsmodi arbeiten. In der Variante von Figur 1 kann z.B. der Werker (10) die leeren Bauteilaufnahmen (4) von der etwas zurückversetzten Rücklaufbahn (17) entnehmen, auf das Ende der vorspringenden Zuführbahn (16) setzen und dort arretieren. Anschließend kann er die Bauteilaufnahme (4) mit ein oder mehreren Bauteilen (2) einzeln oder im Stapel bzw. Paket(3) beladen und anschließend an dieZuführbahn (16) übergeben oder überschieben. Alternativ kann der Werker (10) bereits vorkommissionierte Bauteilaufnahmen (4) mit Bauteilen (2) oder Bauteilstapeln (3) bzw. Bauteilpaketen aus einer Kiste oder einem anderen Gebinde entnehmen und an die Zuführbahn (16) übergeben, wobei leere Bauteilaufnahmen (4) von der Rücklaufbahn (17) in das Gebinde zurückgelegt werden.

Das in der Variante von Figur 2 dargestellte Förder- und Handhabungsgerät (10) kann die gleichen Beladetätigkeiten maschinell und ferngesteuert oder vollautomatisch ausführen. In weiterer Abwandlung ist es möglich, an der Beladestelle (19) ein größeres Magazin für Bauteile (2) und/oder Bauteilaufnahmen (4) bzw. Zwischenträger (6) und außerdem eine Vereinzelungsvorrichtung für die Entnahme einzelner Bauteile (2), Bauteilaufnahmen (4) oder Zwischenträger (6) und die Übergabe an eine Zuführbahn (16) vorzusehen. Dies kann z.B. eine Entstapelvorrichtung für Magazine mit Stapelaufnahme sein.

Die Zuführeinrichtung (1) und deren Sicherungseinrichtung (32) kann eine Kippsicherung (36) für Bauteile (2) aufweisen, die wegen ihrer Form, Anordnung oder dgl. eine gewisse Labilität haben. Figur 14 zeigt eine solche bevorzugt im Staubereich (25) angeordnete Kippsicherung (36) in Verbindung mit langen oder hohen Bauteilen (2), die am unteren Rand in einer Bauteilführung (28), z.B. ähnlich wie in Figur 5, gehalten sind. Die Bauteile (2) können eine gegen die Transportrichtung (35) geneigte Lage einnehmen, was auch für einen Werker (10) zum Beladen günstig ist. Die Kippsicherung (36) wird z.B. von einer Führungsstange (40) gebildet, die sich oberhalb der Führungsbahn (16,17) und der Bauteile (2) in einem definierten Abstand erstreckt und die im wesentlichen die gleiche Neigung wie die Zuführbahn (16,17) aufweist. Der Winkel zwischen der Führungsstange (40) und den Bauteilen (2) ist durch deren Schräglage kleiner als 90°. Wenn lange Bauteile (2) bei einem abrupten Stopp, z.B. einem Auflaufen auf das Stauende, einen Bewegungsimpuls in Transportrichtung (35) erhalten, würden sie ohne Führungsstange (40) eine Drehbewegung um ihre Einsteckstelle an der Bauteilführung (28) ausführen, wobei das freie Bauteilende einen Bogen beschreibt. Durch die im geeigneten Abstand über den Bauteilen (2) und unterhalb des Zenits von deren Bogenbewegung positionierte Führungsstange (40) wird dies verhindert. Die Bauteile (2) schlagen an der Unterseite der Führungsstange (40) an und können sich nicht weiter bewegen, wobei sie auch ihren gegenseitigen Abstand im Stapel (3) behalten. Ein Kippen der Bauteile (2) in Transportrichtung (35) wird dadurch verhindert.

Die Zuführeinrichtung (1) kann gemäß Figur 15 auch eine Überschlagsicherung (37) für die Bauteilaufnahmen (4) haben. Dies ist vor allem an den Be- und Entladestellen (19,20) und im Bereich der Aussparungen (39) an der Führung (29) nützlich. Je nach Bahnneigung besteht die Gefahr, dass die erste nach unten gleitende Bauteilaufnahme (4) auf Grund ihrer Trägheit beim Aufprall auf den Endanschlag (24) mit ihrem hinteren Ende abhebt und nach vorne über den Endanschlag (24) hinweg einen Überschlag vollführt. Dies kann durch eine geeignete Wahl der Aussparungslänge verhindert werden. Die Führung (29) erstreckt sich über den Bereich der vorletzten Bauteilaufnahme (4) hinaus bis knapp vor die Hinterkante der ersten, anschlagenden Bauteilaufnahme (4). Hierdurch gibt es an dieser Rückseite eine kleine Überlappung (x) zwischen der stationären Führung (29) und dem geführten Teil (41), insbesondere dem Bügel oder Flansch der Bauteilaufnahme (4). Durch diesen Formschluss wird der mögliche Drehimpuls aufgefangen. Andererseits kann der Werker (10) oder die Bearbeitungs- bzw. Handhabungseinrichtung (11) die Bauteilaufnahme (4) trotzdem schnell und zuverlässig entnehmen, indem letztere zuerst an ihrer Vorderseite angehoben und dann über den Endanschlag (24) hinweg von der Führungsbahn (16,17) abgezogen wird.

Figur 15 und 16 verdeutlichten diese Ausführung. Die gewollte Schrägstellung zum Entladen ist in Figur 15 gestricheltdargestellt. Figur 16 zeigt eine mögliche Ausgestaltung der Bauteilaufnahme (4) und des geführten Teils (41), wie es ähnlich auch in den anderen Ausführungsbeispielen dargestellt ist. Der Formschluss zwischen den Bügelarmen (41) und der stangenförmige Führung (29) verhindert ein Abheben der Bauteilaufnahme (4). Bei der Überschlagsicherung (37) besteht die vorerwähnte Überlappung (x) zwischen den Bügelarmen (41) und der Führungsstange (29).

Die Überlappung (x) ist im gezeigten Ausführungsbeispiel stationär und permanent vorhanden. In einer nicht dargestellten Variante kann die Überlappung (x) temporär und entfernbar sein, wobei z.B. am Ende der Führungstange (29) ein axial beweglicher Stift vorhanden ist, der im kritischen Moment beim Anschlagen einer Bauteilaufnahme (4) am Endanschlag (24) ausgefahren ist und im Eingriff mit dem Bügel oder Flansch (41) eine Überlappung (x) bildet und der anschließend wieder zurückgezogen wird, um eine maschinelle oder manuelle Entnahme in Richtung senkrecht zur Führungsbahn (16,17) zu ermöglichen.

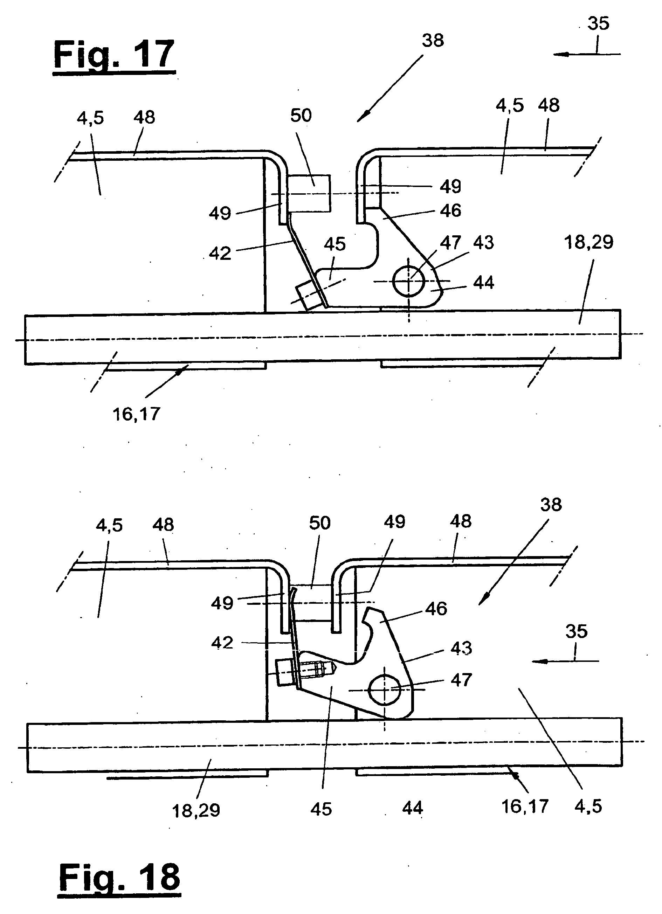

Die Zuführeinrichtung (1) bzw. ihre Sicherungseinrichtung (32) kann ferner eine in Figur 17 und 18.dargestellte Bremseinrichtung (38) aufweisen, die für ein Bremsen der jeweils in Transportrichtung (35) nachfolgenden Bautellaufnahme (4) sorgt. Insbesondere bei Bauteilaufnahmen (4) mit schweren Bauteilen (2) bewirktdie anjeder Bauteilaufnahme (4) montierte Bremseinrichtung (38) einen wesentlich sanfteren Aufprall der Bauteilaufnahmen (4) untereinander und am Endanschlag (24).

Die Bremseinrichtung (38) weist z.B. an der Vorderseite der Bauteilaufnahme (4) eine Bremsnocke (43) auf, die zwei abstehende Hebelarme (45,46) und dazwischen einen in der Nähe des bodennahen Drehlagers (47) bzw. der Achse angeordneten und in Gegenrichtung nach außen ragenden exzentrischen Nockenkopf (44) aufweist, der im normalen Bewegungsbetrieb über der Führungsbahn (16,17) schwebt. Der eine Hebelarm ist als Anlaufarm (45) ausgebildet und weist in Transportrichtung (35) nach vorn, wobei er mit Abstand oberhalb des zum Bremsen kontaktierten Teils der Führungsbahn (16,17), z.B. einer Führungsstange (29) oder einer Lauf- oder Gleitfläche (18), schwebend angeordnet ist. Der Anlaufarm (45) trägt am vorderen Ende einen Auslöser (42), welcher am rückwärtigen Bereich, insbesondere am hinteren Steg (49) oder an der hinteren Korpuswand, der vorauslaufenden Bauteilaufnahme (4) anschlägt.

Der Auslöser (42) kann z.B. als ein schräg in Förderrichtung (35) nach vorn gerichtetes Federblech ausgebildet sein, welches am vorderen Ende zu einer Anlaufnase abgebogen ist und am rückwärtigen Ende mit einer Schraube oder dgl. am Armende fixiert ist. Der Auslöser (42) ragt über das vordere Ende der Bauteilaufnahme (4) hinaus. Der Überstand ist größer als die Länge eines Puffers (50), der hier z.B. am rückwärtigen Steg (49) der vorherigen Bauteil-aufnahme (4) angeordnet ist.

Der andere Hebelarm (46) ist als Anschlagarm ausgebildet und ragt von der Achse (47) schräg nach oben, wobei er an der Innenseite des vorderen Stegs (49) anschlägt und die Drehbewegung der Bremsnocke (43) gegen den Uhrzeigersinn begrenzt. Über den Anschlagarm (46) wird der Anlaufarm (45) in der dargestellten Parallellage zur Führungsbahn (16,17) gehalten.

Figur 17 zeigtden Beginn und Figur 18 das Ende des Bremsvorgangs. Die in Transportrichtung (35) auflaufende Bauteiläufnahme (4) schlägt mit dem Auslöser (42) an der vorherigen Bauteilaufnahme (4) oder am Endanschlag (24) an, wobei der Anschlagpunkt mit Abstand oberhalb der Drehachse (37) liegt. Das Federblech (42) stößt am rückwärtigen Steg (49) neben dem Puffer (50) oder am Endanschlag (24) an und wird gleitend nach oben abgelenkt, wodurch die Bremsnocke (43) im Uhrzeigersinn gedreht wird. Hierdurch wandert der ggf. mit einem geeigneten Reibbelag versehene und anfangs beabstandete, exzentrische Nockenkopf oder Bremskopf (44) nach unten gegen die Führungsbahn (16,17) bzw. die Führungsstange (29) oder die Lauffläche (18) und wird hier angepresst, wobei er bei Berührungskontakt eine Bremswirkung entfaltet. Er kann auch zwischen Rollen einer Rollenbahn (18) bei geeigneter Formgebung einhaken. Außerdem hebt er die Bauteilaufnahme (4) etwas an. Die Nockendrehung erlaubt eine Annäherung der beiden Bauteilaufnahmen (4) und am Ende des Bremsvorgangs einen Pufferkontakt (50). Beim Anschlag kann sich das Federblech (42) verbiegen. Günstig ist auch eine schräge Befestigung am entsprechend geneigten Stirnende des Anlaufarms (45).

Durch eine in Transportrichtung (35) vor der Achse (47) liegende Massenkonzentration der Bremsnocke (43) entsteht ein rückstellendes Moment. Durch ihr Eigengewicht dreht die Bremsnocke (43) wieder in die Ausgangs- und Anschlagstellung von Figur 17 zurück, sobald die vorherige Bauteilaufnahme (4) distanziert wurde, z.B. durch eine Entnahme, und der Auslöser (42) keinen Widerstand mehr findet. Durch die auch vom Gewicht der Bauteilaufnahme (4) und der Bauteile (2) unterstützte Rückdrehung der Bremsnocke (43) wird die Bremswirkung wieder aufgehoben und die Bauteilaufnahmen (4) kann sich entlang der Führung (16,17) weiter vorwärts bewegen. Diese Ausgestaltung einer Bremseinrichtung (38) hat eigenständige erfinderische Bedeutung und kann auch bei anderen Transportsystemen und Zuführeinrichtungen Verwendung finden.

In weiterer Abwandlung der gezeigten und beschriebenen Ausführungsbeispiele kann zur Transportunterstützung an ein oder mehreren Führungsbahnen (16,17) ein Antrieb vorhanden sein, der auf die Bauteilaufnahmen (4) und/oder die Bauteile (2) einwirkt. Der Antrieb kann für eine Deaktivierung im Staubereich (25) einen Freilauf aufweisen oder eine Durchrutschfunktion haben. DerAntrieb kann z.B. ein umlaufendes Förderband mit Reibwirkung sein. Alternativ können die in den Ausführungsbeispielen dargestellten stangenförmigen Führungselemente der Führungseinrichtung (29) als drehende Schnecken mit Reibförderung ausgebildet sein und zugleich Führungs- und Antriebsfunktion haben. Auch die Rollen (18) können z.T. einen Antrieb haben.

Darüber hinaus sind weitere Abwandlungen der gezeigten und beschriebenen Ausführungsbeispiele möglich. Die Vereinzelungseinrichtung (26) kann an den Bauteilen (2) statt an den Bauteilaufnahmen (4) angreifen. Ferner können die Bauteilaufnahmen (4) eine beliebige andere Formgebung und Anordnung als in den beschriebenen Ausführungsbeispielen haben. Auch die technische Ausgestaltung, Zahl und Anordnung der Führungsbahnen (16,17) kann variiert werden. Sie sind in den gezeigten Ausführungsbeispielen ortsfest an einem gemeinsamen Gestell (23) angeordnet. Alternativ können getrennte Gestelle oder Aufnahmen vorhanden sein. Ferner können die Führungsbahnen (16,17) beweglich gelagert sein. Sie könnendabei einerseits in ihrer Neigung verstellbar sein. Bei Anordnung eines zusätzlichen Antriebs können sie auch eine horizontale Lage statt der gezeigten Abwärtsneigung einnehmen. Ferner können ein oder mehrere Führungsbahnen (16,17) verfahrbar oder anderweitig ortsveränderlich angeordnet sein. Die Sicherungseinrichtung (32) kann anders ausgebildet sein. Sie kann z.B. eine Füllstandsüberwachung mit geeigneten Sensoren für ein oder mehrere Führungsbahnen (16,17) aufweisen. Ferner sind Überwachungseinrichtungen zur Transportkontrolle möglich, die ein Hängenbleiben einer Bauteilaufnahme (4) an einer Führungsbahn (16,17) detektieren. Auch eine Überwachungseinrichtung fürdie Existenz einer beladenen Bauteilaufnahme (4) an der Entladestelle (20) kann vorgesehen sein.

In den gezeigten Ausführungsbeispielen werden die entladenen Bauteile (2) innerhalb der Bearbeitungsstation (8) zu anderen Stellen weiter transportiert. Alternativ ist eine Rückgabe der bearbeiteten Bauteile (2) an die gleiche oder eine andere Zuführeinrichtung (1) möglich. Die Zuführeinrichtung (1) kann auf diese Weise alternativ oder zusätzlich im Umkehrbetrieb und in Gegenrichtung benutztwerden. Die Bauteile (2) können dadurch mit dergleichen Zuführeinrichtung (1) oder mit unterschiedlichen Zuführeinrichtungen (1) in einem Kreislauf transportiert werden und an der Beladestelle (19) wieder entnommen und allein oder mit den Bauteilaufnahmen (4) bzw. den Zwischenträgern (6) abtransportiert werden. Hierbei ist es möglich, am Abgabeende einer Rücklaufbahn (17) eine Entladehilfe vorzusehen. Die Enden der Zuführbahn(en) (16) und der Rücklaufbahn(en) (17) müssen auch nicht wie in den gezeigten Ausführungsbeispielen räumlich benachbart sein. Sie können auch weiter auseinander liegen. Ferner kann eine Rücklaufbahn (17) auch an einem stationären oder instationären Magazin enden und dort die Bauteilaufnahmen (4) bzw. Zwischenträger (6) übergeben.

### BEZUGSZEICHENLISTE

- 1: Zuführeinrichtung
- 2: Bauteil
- 3: Bauteilstapel, Bauteilpaket
- 4: Bauteilaufnahmen, Bauteilträger
- 5: Korpus
- 6: Zwischenträger
- 7: Bearbeitungsanlage
- 8: Bearbeitungsstation (fortgesetzt)
- 9: Schutzeinrichtung, Zaun
- 10: Anlieferung, Werker, Förder- und Handhabungsgerät
- 11: Bearbeitungseinrichtung, Handhabungseinrichtung
- 12: Roboter
- 13: Greifeinrichtung
- 14: Greifelement für Bauteil
- 15: Greifelement für Bauteilaufnahme
- 16: Führungsbahn, Zuführbahn
- 17: Führungsbahn, Rücklaufbahn
- 18: Reibminderung, Gleitbelag, Rollen
- 19: Beladestelle
- 20: Entladestelle
- 21: Bahnabschnitt an Beladestelle
- 22: Bahnabschnitt an Entladestelle
- 23: Gestell
- 24: Endanschlag
- 25: Staubereich
- 26: Vereinzelungseinrichtung
- 27: Vereinzelungselement
- 28: Bauteilführung
- 29: Führung für Bauteilaufnahmen
- 30: Stützeinrichtung für Bauteil
- 31: Rückführeinrichtung
- 32: Sicherungseinrichtung
- 33: Einlegemaske
- 34: Riegeleinrichtung
- 35: Transportrichtung
- 36: Kippsicherung
- 37: Überschlagsicherung
- 38: Bremseinrichtung
- 39: Aussparung
- 40: Führungsstange
- 41: geführte Teil, Bügel, Flansch, Nut, Führungsfläche
- 42: Auslöser, Federblech
- 43: Bremsnocke
- 44: Nockenkopf, Bremskopf
- 45: Hebelarm, Anlaufarm
- 46: Hebelarm, Anschlagarm
- 47: Drehlager, Achse
- 48: Deckplatte
- 49: Steg
- 50: Puffer

- x: Überlappung

## Patentansprüche

1. Zuführeinrichtung für Bauteile (2), wobei die Zuführeinrichtung (1) mehrere einzeln bewegliche Bauteilaufnahmen (4) für jeweils ein oder mehrere Bauteile (2) und zwei oder mehr Führungsbahnen (16,17) für die Zu- und Rückführung der Bauteilaufnahmen (4) aufweist, die sich zwischen einer Beladestelle (19) und einer Entladestelle (20) erstrecken, **dadurch gekennzeichnet, dass** zumindest eine Führungsbahn (16,17) eine mehrseitige formschlüssige und kippsichere Führung (29) für die Bauteilaufnahmen (4) aufweist.

2. Zuführeinrichtung nach Anspruch 1, **dadurch gekennzeichnet, dass** die Führungsbahnen (16,17) als getrennt angeordnete Zuführ- und Rücklaufbahnen für die Bauteilaufnahmen (4) ausgebildet sind, die entgegen gesetzt gerichtete Neigungen aufweisen, wobei die Bauteilaufnahmen (4) durch Schwerkraft transportiert werden.

3. Zuführeinrichtung nach Anspruch 1 oder 2, **dadurch gekennzeichnet, dass** mindestens eine Führungsbahn (16,17) einen Staubereich (25) am Förderende aufweist.

4. Zuführeinrichtung nach Anspruch 1, 2 oder 3, **dadurch gekennzeichnet, dass** die Führungsbahnen (16,17) an ein oder beiden Enden einen beweglichen Bahnabschnitt (21,22) und mindestens eine Rückführeinrichtung (31) für den Transport der Bauteilaufnahmen (4) zwischen den Führungsbahnen (16,17) aufweist.

5. Zuführeinrichtung nach einem der vorhergehenden Ansprüche, **dadurch gekennzeichnet, dass** mindestens eine Führungsbahn (16,17) eine Vereinzelungseinrichtung (26) für die Bauteilaufnahmen (4) oder die Bauteile (2) aufweist.

6. Zuführeinrichtung nach einem der vorhergehenden Ansprüche, **dadurch gekennzeichnet, dass** die Bauteilaufnahme (4) mindestens ein geführtes Teil (41) aufweist, welches beim Transport mit der Führung (29) in einem formschlüssigen Eingriff nach mehreren Richtungen steht.

7. Zuführeinrichtung nach einem der vorhergehenden Ansprüche, **dadurch gekennzeichnet, dass** die Bauteilaufnahmen (4) eine Bauteilführung (28) für ein oder mehrere Bauteile (2) aufweisen, wobei die Führungsbahn (16,17) ein oder mehrere Stützeinrichtungen (30) für die Bauteile (2) aufweist.

8. Zuführeinrichtung nach einem der vorhergehenden Ansprüche, **dadurch gekennzeichnet, dass** die Bauteilaufnahmen (4) einen Korpus (5) und einen austauschbaren Zwischenträger (6) aufweist.

9. Zuführeinrichtung nach einem der vorhergehenden Ansprüche, **dadurch gekennzeichnet, dass** die Zuführeinrichtung (1) eine Bremseinrichtung (38) mit einer drehbeweglichen Bremsnocke (43) an der Bauteilaufnahme (4) aufweist, die bei Auflaufen an einen Endanschlag (24) oder eine vorherige Bauteilaufnahme (4) aktivierbar ist.

10. Zuführeinrichtung nach einem der vorhergehenden Ansprüche, **dadurch gekennzeichnet, dass** die Zuführeinrichtung (1) eine Überschlagsicherung (37) an der Entladestelle (20) mit einer kleinen Überlappung (x) am rückwärtigen Ende der Bauteilaufnahme (4) zwischen der Führung (29) und dem geführten Teil (41) sowie eine Kippsicherung (36) mit einer Führungstange (40) aufweist, die parallel zur Führungsbahn (16,17) ausgerichtet und mit einem die Bauteildrehung begrenzenden Abstand über den Bauteilen (2) angeordnet ist.

11. Bearbeitungsstation für Bauteile (2) mit mindestens einer automatischen Bearbeitungs- oder Handhabungseinrichtung (11) und einer peripheren Schutzeinrichtung (9), wobei die Bearbeitungsstation (8) mindestens eine Zuführeinrichtung (1) für Bauteile (2) aufweist, wobei die Zuführeinrichtung (1) mehrere einzeln bewegliche Bauteilaufnahmen (4) für jeweils ein oder mehrere Bauteile (2) und zwei oder mehr Führungsbahnen (16,17) für die Zu- und Rückführung der Bauteilaufnahmen (4) aufweist, die sich zwischen einer Beladestelle (19) und einer Entladestelle (20) erstrecken, **dadurch gekennzeichnet, dass** die Zuführeinrichtung (1) nach mindestens einem der Ansprüche 1 bis 10 ausgebildet ist.

12. Bearbeitungsstation nach Anspruch 11, **dadurch gekennzeichnet, dass** die Zuführeinrichtung (1) durch die Schutzeinrichtung (9) reicht, wobei die Bearbeitungs- oder Handhabungseinrichtung (11) mindestens einen mehrachsigen Roboter (12) mit einer Greifeinrichtung (13) für die Bauteile (2) und/oder die Bauteilaufnahmen (4) aufweist.

13. Bearbeitungsstation nach Anspruch 11 oder 12, **dadurch gekennzeichnet, dass** die Bearbeitungs- oder Handhabungseinrichtung (11) eine Ausbildung als Rückführeinrichtung (31) für die Bauteilaufnahmen (4) aufweist.

## Claims

1. Arrangement for feeding components (2), wherein the feed arrangement (1) has a plurality of individually moveable component holders (4), for in each case one or more components (2), and two or more guide paths (16, 17), which are intended for feeding and returning the component holders (4) and extend between a loading location (19) and an unloading location (20), **characterized in that** at least one guide path (16, 17) has a form-fitting, tilting-resistant guide (29) providing guidance on a number of sides over the component holders (4).

2. Feed arrangement according to Claim 1, **characterized in that** the guide paths (16, 17) are designed as separately arranged feed and return paths for the component holders (4), these paths being inclined in opposite directions, wherein the component holders (4) are transported by gravitational force.

3. Feed arrangement according to Claim 1 or 2, **characterized in that** at least one guide path (16, 17) has an accumulating region (25) at the conveying end.

4. Feed arrangement according to Claim 1, 2 or 3, **characterized in that** the guide paths (16, 17), at one or both ends, have a moveable path portion (21, 22) and at least one return arrangement (31) for transporting the component holders (4) between the guide paths (16, 17).

5. Feed arrangement according to one of the preceding claims, **characterized in that** at least one guide path (16, 17) has a separating arrangement (26) for the component holders (4) or the components (2).

6. Feed arrangement according to one of the preceding claims, **characterized in that** the component holder (4) has at least one guided part (41) which, during transportation, is in form-fitting engagement with the guide (29) in a number of directions.

7. Feed arrangement according to one of the preceding claims, **characterized in that** the component holder (4) has a component guide (28) for one or more components (2), wherein the guide path (16, 17) has one or more supporting arrangements (30) for the components (2).

8. Feed arrangement according to one of the preceding claims, **characterized in that** the component holder (4) has a basic structure (5) and an interchangeable intermediate carrier (6).

9. Feed arrangement according to one of the preceding claims, **characterized in that** the feed arrangement (1) has a braking arrangement (38) with a rotatable braking element (43) on the component holder (4), it being possible for this braking element to be activated as it runs onto an end stop (24) or a preceding component holder (4).

10. Feed arrangement according to one of the preceding claims, **characterized in that** the feed arrangement (1) has an overturning-prevention means (37) at the unloading location (20), with a small amount of overlap (x) at the rear end of the component holder (4) between the guide (29) and the guided part (41), and a tilting-prevention means (36) with a guide rod (40), which is oriented parallel to the guide path (16, 17) and is arranged above the components (2) at a distance which limits the rotation of the components.

11. Processing station for components (2), having at least one automatic processing or handling arrangement (11) and a peripheral safeguarding arrangement (9), wherein the processing station (8) has at least one feed arrangement (1) for components (2), wherein the feed arrangement (1) has a plurality of individually moveable component holders (4), for in each case one or more components (2), and two or more guide paths (16, 17), which are intended for feeding and returning the component holders (4) and extend between a loading location (19) and an unloading location (20), **characterized in that** the feed arrangement (1) is designed according to at least one of Claims 1 to 10.

12. Processing station according to Claim 11, **characterized in that** the feed arrangement (1) extends through the safeguarding arrangement (9), wherein the processing or handling arrangement (11) has at least one multi-axis robot (12) with a gripping arrangement (13) for the components (2) and/or the component holders (4).

13. Processing station according to Claim 11 or 12, **characterized in that** the processing or handling arrangement (11) is designed as a return arrangement (31) for the component holders (4).

## Revendications

1. Dispositif d'alimentation pour composants (2), lequel dispositif d'alimentation (1) présente plusieurs logements (4) de composants mobiles individuellement pour un ou plusieurs composants respectifs (2) et deux ou plus de deux voies de guidage (16, 17) pour l'alimentation et le retour des logements (4) de composants, lesquelles s'étendent entre une zone de chargement (19) et une zone de déchargement (20), **caractérisé en ce qu'**au moins une voie de guidage (16, 17) présente un guide (29) pour les logements (4) de composants qui est protégé contre le basculement et engagé de plusieurs côtés par coopération de forme.

2. Dispositif d'alimentation selon la revendication 1, **caractérisé en ce que** les voies de guidage (16, 17) sont réalisées sous forme de voies d'alimentation et de retour disposées de manière séparée pour les logements (4) de composants, lesquelles présentent des inclinaisons orientées de manière opposée, les logements (4) de composants étant transportés sous l'effet de la force de pesanteur.

3. Dispositif d'alimentation selon la revendication 1 ou 2, **caractérisé en ce qu'**au moins une voie de guidage (16, 17) présente une région d'accumulation (25) à l'extrémité de transport.

4. Dispositif d'alimentation selon la revendication 1, 2 ou 3, **caractérisé en ce que** les voies de guidage (16, 17) présentent, au niveau d'une ou des deux extrémités, une portion de voie mobile (21, 22) et au moins un dispositif de retour (31) pour le transport des logements (4) de composants entre les voies de guidage (16, 17).

5. Dispositif d'alimentation selon l'une quelconque des revendications précédentes, **caractérisé en ce qu'**au moins une voie de guidage (16, 17) présente un dispositif de séparation (26) pour les logements (4) de composants ou pour les composants (2).

6. Dispositif d'alimentation selon l'une quelconque des revendications précédentes, **caractérisé en ce que** le logement (4) de composants présente au moins une partie guidée (41), qui est en prise par engagement par correspondance géométrique dans plusieurs directions avec le guide (29) lors du transport.

7. Dispositif d'alimentation selon l'une quelconque des revendications précédentes, **caractérisé en ce que** les logements (4) de composants présentent un guide (28) de composants pour un ou plusieurs composants (2), la voie de guidage (16, 17) présentant un ou plusieurs dispositifs de support (30) pour les composants (2).

8. Dispositif d'alimentation selon l'une quelconque des revendications précédentes, **caractérisé en ce que** le logement (4) de composants présente un corps (5) et un support intermédiaire (6) remplaçable.

9. Dispositif d'alimentation selon l'une quelconque des revendications précédentes, **caractérisé en ce que** le dispositif d'alimentation (1) présente un dispositif de freinage (38) avec une came de freinage mobile en rotation (43) sur le logement (4) de composants, laquelle peut être activée lors de l'arrivée contre une butée de fin de course (24) ou contre un logement (4) de composants précédent.

10. Dispositif d'alimentation selon l'une quelconque des revendications précédentes, **caractérisé en ce que** le dispositif d'alimentation (1) présente une fixation contre le retournement (37) au niveau de la zone de déchargement (20) avec un petit chevauchement (x) au niveau de l'extrémité arrière du logement (4) de composants entre le guide (29) et la partie guidée (41) ainsi qu'une fixation contre le basculement (36) avec une tige de guidage (40), qui est orientée parallèlement à la voie de guidage (16, 17) et qui est disposée au-dessus des composants (2) à une distance limitant la rotation des composants.

11. Poste de traitement pour composants (2) comprenant au moins un dispositif de traitement ou de manipulation automatique (11) et un dispositif de protection périphérique (9), le poste de traitement (8) présentant au moins un dispositif d'alimentation (1) pour des composants (2), le dispositif d'alimentation (1) présentant plusieurs logements (4) de composants mobiles individuellement pour un ou plusieurs composants respectifs (2) et deux ou plus de deux voies de guidage (16, 17) pour l'alimentation et le retour des logements (4) de composants, lesquelles s'étendent entre une zone de chargement (19) et une zone de déchargement (20), **caractérisé en ce que** le dispositif d'alimentation (1) est réalisé selon au moins l'une quelconque des revendications 1 à 10.

12. Poste de traitement selon la revendication 11, **caractérisé en ce que** le dispositif d'alimentation (1) s'étend à travers le dispositif de protection (9), le dispositif de traitement ou de manipulation (11) présentant au moins un robot (12) à plusieurs axes avec un dispositif de préhension (13) pour les composants (2) et/ou les logements (4) de composants.

13. Poste de traitement selon la revendication 11 ou 12, **caractérisé en ce que** le dispositif de traitement ou de manipulation (11) présente une réalisation sous forme de dispositif de retour (31) pour les logements (4) de composants.
